# EUROPÄISCHE PATENTSCHRIFT

(11) **EP 2 440 617 B1**
(45) Veröffentlichungstag und Bekanntmachung des Hinweises auf die Patenterteilung: **28.11.2018**
(21) Anmeldenummer: 10721504.8
(22) Anmeldetag: 26.05.2010
(51) Int. Cl.: C08J 5/04, C08K 3/22, C08K 3/34, C08K 3/36, C08K 3/40, C08K 7/02, C08L 33/08, C08L 33/12, C08L 89/04, C08L 101/00

(54) **AUSHÄRTBARE GIESSMASSE ENTHALTEND KERATINFASERN UND HIERAUS HERGESTELLTE KUNSTSTOFFFORMTEILE**
CURABLE CASTING MATERIAL COMPRISING KERATIN FIBRES AND MOLDED PLASTIC ARTICLES PRODUCED USING THE SAME
MASSE DE COULAGE DURCISSABLE COMPRENANT DES FIBRES DE KÉRATINE ET PIÈCES MOULÉES PLASTIQUES OBTENUES À PARTIR DE LADITE MASSE

(30) Priorität: 08.06.2009 DE 102009025225
(43) Veröffentlichungstag der Anmeldung: 18.04.2012
(73) Patentinhaber: BLANCO GmbH + Co KG, 75038 Oberderdingen (DE)
(72) Erfinder: HAJEK, Andreas, 76356 Weingarten (DE); MARZ, Thomas, 74889 Sinsheim (DE)
(74) Vertreter: Hoeger, Stellrecht & Partner Patentanwälte mbB
(86) Internationale Anmeldenummer: PCT/EP2010/057268
(87) Internationale Veröffentlichungsnummer: WO 2010/142531

(56) Entgegenhaltungen:
- WO-A1-03/080716
- US-A1- 2005 148 703
- Anonymous: "Polymer Reinforcement"[Online] 2007, XP002593349 CG2 NanoCoatings Inc. Gefunden im Internet: URL:www.cg2nanocoatings.com/CG2PolymerRein forcement.pdf> [gefunden am 2010-07-23]
- MARTINEZ-HERNANDEZ ET AL: "Dynamical-mechanical and thermal analysis of polymeric composites reinforced with keratin biofibers from chicken feathers" COMPOSITES PART B: ENGINEERING, Bd. 38, Nr. 3, 26. Januar 2007 (2007-01-26), Seiten 405-410, XP005863110 ELSEVIER, UK ISSN: 1359-8368
- MARTINEZ-HERNANDEZ ET AL: "Mechanical properties evaluation of new composites with protein biofibers reinforcing poly(methyl methacrylate)" POLYMER, Bd. 46, Nr. 19, 8. September 2005 (2005-09-08), Seiten 8233-8238, XP005036837 ELSEVIER SCIENCE PUBLISHERS B.V, GB ISSN: 0032-3861

## Beschreibung

Die vorliegende Erfindung betrifft die Verwendung einer aushärtbaren Gießmasse zur Herstellung von Küchen- und Sanitärartikeln, umfassend eine Bindemittelkomponente auf Basis eines polymerisierbaren Monomers und einen Anteil von ca. 40 bis ca. 85 Gew.% eines oder mehrerer anorganischer Füllstoffe.

Derartige Gießmassen werden bereits seit Längerem im Küchen- und Sanitärbereich eingesetzt, um Küchenspülen, Küchenarbeitsplatten, Waschbecken, Badewannen und dergleichen herzustellen. Der relativ hohe Anteil an anorganischem Füllstoff, der in der aus der Bindemittelkomponente gebildeten Polymermatrix verteilt ist, ist hierbei erforderlich, um die für diesen Einsatzbereich erforderlichen Materialeigenschaften, wie z.B. eine ausreichende Temperaturbeständigkeit und Kratzfestigkeit der Oberfläche, zu erhalten. Daneben kann durch die Auswahl des oder der Füllstoffe eine optische Strukturierung der Oberfläche der Kunststoffformteile erzielt werden, wie z.B. eine Granitdekoroberfläche.

Die Herstellung von Küchen- und Sanitärartikeln aus aushärtbaren Gießmassen ist im Stand der Technik bereits vielfach beschrieben worden, so z.B. in der DE 38 32 351 A1 oder der WO 2005/071000 A1.

Als nachteilig hat sich bei diesen Kunststoffformteilen die durch den - notwendigen - hohen Füllstoffgehalt bedingte relative Sprödigkeit des Materials erwiesen. Hierdurch ist die Widerstandsfähigkeit gegenüber Schlag- und Stoßbelastungen, d.h. die Schlagzähigkeit der Kunststoffformteile, zum Teil nicht ausreichend hoch. Derartigen Schlag- und Stoßbelastungen sind Küchenspülen und dergleichen sowohl beim Gebrauch als auch während des Transports regelmäßig ausgesetzt.

Die US 2005/0148703 A1 offenbart Polymerverbundstoffe, die Keratin und mindestens ein Polymer umfassen. Das Keratinmaterial kann in der Form von Fasern, Partikeln oder großen Stücken aus Tierhaaren, Nägeln, Hufen, Horn oder Vogelfedern vorliegen. Die Polymerverbundstoffe können ferner ein Farbpigment als anorganischen Füllstoff enthalten.

Die Veröffentlichung "Polymer Reinforcement" der Firma CG2 NanoCoatings Inc. aus dem Jahr 2007 offenbart die Verwendung von Keratin als Verstärkungsmaterial in Polymeren, insbesondere Polymethylmethacrylat, die keine anorganischen Füllstoffe enthalten.

In zwei Artikeln von A. Martinez-Hernandez et al. in Polymer 46 (2005) 8233-8238 bzw. in Composites: Part B 38 (2007) 405-410 werden Verbundmaterialien aus Polymethylmethacrylat und Keratinfasern aus Hühnerfedern sowie die mechanischen und thermischen Eigenschaften dieser Materialien beschrieben.

Der Erfindung liegt daher die Aufgabe zugrunde, die Verwendung einer aushärtbaren Gießmasse vorzuschlagen, mit der Kunststoffformteile mit einer erhöhten Schlagzähigkeit hergestellt werden können.

Diese Aufgabe wird durch die Verwendung einer Gießmasse gemäß Anspruch 1 gelöst.

Durch den Zusatz von Keratinfasern konnte überraschenderweise eine signifikante Erhöhung der Schlagzähigkeit der hergestellten Kunststoffformteile erzielt werden, bei einer im Übrigen unveränderten Zusammensetzung der Gießmasse. Dieser verstärkende Effekt von Keratinfasern ist insofern bemerkenswert, als es sich bei diesen nicht um so genannte Hochmodulfasern (wie z.B. Aramidfasern) handelt. Zu erwähnen ist in diesem Zusammenhang auch die Tatsache, dass ein entsprechender Effekt z.B. durch den Zusatz von Glasfasern, deren verstärkende Wirkung bekannt ist, nicht erreicht werden kann.

Der erfindungsgemäße Einsatz von Keratinfasern ist auch in soweit vorteilhaft, als eine spezielle Oberflächenbeschichtung der Fasern nicht erforderlich ist, um eine ausreichende Adhäsion zwischen den Fasern und der Polymermatrix zu gewährleisten. Zudem kann ohne Probleme eine sehr gleichmäßige Verteilung der Keratinfasern in der Gießmasse bzw. in der ausgehärteten Polymermatrix erreicht werden. Demgegenüber ist bei Glasfasern in der Regel eine Silanisierung der Oberfläche erforderlich, und es wird häufig eine Absetzung der Fasern während der Aushärtung der Gießmasse beobachtet, was zu einer inhomogenen Verteilung führt.

Der Anteil an Keratinfasern in der Gießmasse beträgt ca. 0,1 bis ca. 0,5 Gew.%. Unterhalb von ca. 0,1 Gew.% ist der entsprechende Effekt kaum ausgeprägt, und bei mehr als ca. 0,5 Gew.% kommt es teilweise zu einer Zusammenballung einzelner Fasern. Bevorzugt ist ein Anteil an Keratinfasern von ca. 0,15 bis ca. 0,35 Gew.%, wobei in dem Bereich von ca. 0,2 bis ca. 0,3 Gew.% besonders gute Ergebnisse erzielt werden.

Bei den im Rahmen der vorliegenden Erfindung eingesetzten Keratinfasern handelt es sich um Kurzfasern mit einer Länge von bis ca. 10 mm. Im Gegensatz zu längeren Fasern werden hierdurch die Handhabbarkeit, die Verarbeitung und die gleichmäßige Verteilung der Fasern in der Gießmasse begünstigt. Besonders vorteilhaft sind Keratinfasern, die eine Länge von bis zu ca. 5 mm aufweisen, insbesondere eine Länge von ca. 1 bis ca. 5 mm.

Der Durchmesser der Keratinfasern liegt im Bereich von ca. 10 bis ca. 50 µm. Die oben beschriebenen Vorteile können insbesondere mit Faserdurchmessern von ca. 20 bis ca. 25 µm erzielt werden.

Bei Keratin handelt es sich um ein wasserunlösliches Strukturprotein, das den Hauptbestandteil von Säugetierhaar darstellt, aber auch von Federn, Nägeln und Hörnern. Die vorliegend eingesetzten Keratinfasern sind bevorzugt aus Säugetierhaar gewonnen, insbesondere aus Schafswolle.

Die Keratinfasern, die für die Erfindung zum Einsatz kommen, werden günstigerweise durch Auskämmen von Schafswolle und Schneiden auf die gewünschte Länge gewonnen. Vorzugsweise werden die Fasern zusätzlich entfettet, da hierdurch die Ahhäsion zwischen den Fasern und der Bindemittelkomponente bzw. der ausgehärteten Polymermatrix verbessert wird. Geeignete Verfahren zur Entfettung sind im Stand der Technik bekannt.

Für die Bindemittelkomponente können im Rahmen der Erfindung verschiedene Arten von Monomeren eingesetzt werden, wobei Methylacrylat oder Methylmethacrylat, die nach der Aushärtung zu Formkörpern auf Acrylharzbasis führen, besonders bevorzugt sind. Zur Erhöhung der Viskosität der Gießmasse kann die Bindemittelkomponente einen Anteil an vorpolymerisiertem Polymethylacrylat (PMA) oder Polymethylmethacrylat (PMMA) umfassen.

Der Anteil des oder der anorganischen Füllstoffe an der Gießmasse liegt vorzugsweise im Bereich von ca. 60 bis ca. 80 Gew.%. Als Füllstoffe können dabei die aus dem Stand der Technik bekannten Materialien eingesetzt werden, insbesondere Quarz, Cristobalit, Tridymit, Glas, Aluminiumtrihydroxid, Wollastonit oder Mischungen hiervon.

Der anorganische Füllstoff umfasst vorzugsweise granulare Partikel mit einem mittleren Durchmesser von ca. 0,1 bis ca. 1 mm. Durch die Auswahl der Partikelgröße, insbesondere auch durch die Verwendung mehrerer Füllstofffraktionen mit unterschiedlichen Partikelgrößen, kann eine optisch ansprechende, strukturierte Oberfläche des Kunststoffformteils erhalten werden, insbesondere die bereits eingangs angesprochene Granitdekoroberfläche.

Zur Erzielung spezieller Effekte kann der anorganische Füllstoff zusätzlich Partikel in Form von Fasern, Whiskern oder Nadeln umfassen.

Als Bindemittelkomponente sowie als anorganischer Füllstoff können insbesondere auch die Materialien eingesetzt werden, die in der WO 95/26368 A1, der EP 0 716 097 A1, der WO 01/27175 A1, der WO 03/080716 A1, der EP 1 207 180 A1 und der WO 2005/071000 A1 jeweils empfohlen werden.

Bei einer weiteren Ausführungsform der Erfindung umfasst die aushärtbare Gießmasse zusätzlich ein mit einer ungesättigten Gruppe funktionalisiertes Organosiloxan. Durch den Zusatz derartiger Organosiloxane kann die schmutzabweisende Wirkung der Oberfläche der Kunststoffformteile erhöht werden, wie dies in der WO 03/080716 A1 beschrieben ist. Hierdurch wird die Reinigung der entsprechenden Küchen- und Sanitärartikel erleichtert.

Die vorliegende Erfindung betrifft des Weiteren die Verwendung der erfindungsgemäßen Gießmasse zur Herstellung von Küchen- oder Sanitärartikeln, insbesondere von Küchenspülen, Küchenarbeitsplatten, Waschbecken, Badewannen und dergleichen.

Ferner betrifft die Erfindung Kunststoffformteile, die unter Verwendung der erfindungsgemäßen Gießmasse hergestellt sind.

Diese und weitere Vorteile der Erfindung werden im Folgenden anhand der Beispiele unter Bezugnahme auf die Zeichnung näher erläutert. Es zeigt im Einzelnen:

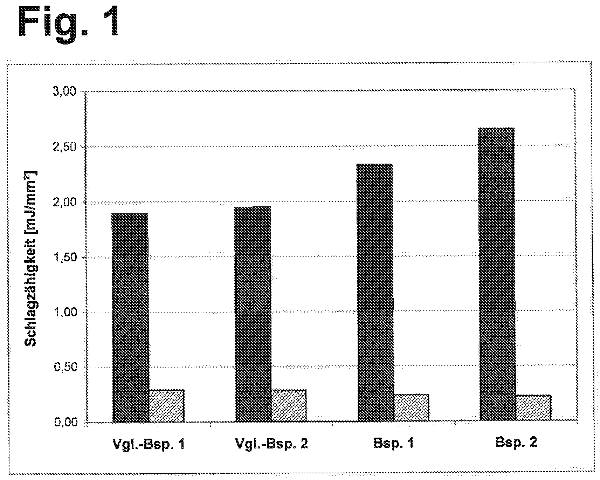

- Figur 1:: Diagramm betreffend die Schlagzähigkeit von Kunststoffformteilen gemäß den Beispielen 1 und 2 und den Vergleichsbeispielen 1 und 2.

### Beispiele

### 1. Herstellung der Gießmasse

Zunächst wird die Bindemittelkomponente hergestellt, indem 2,0 kg Polymethylmethacrylat (PMMA) mit einem Molekulargewicht im Bereich von 50.000 bis 250.000 g/mol in 8,0 kg Methylmethacrylat (MMA) gelöst werden. Dieser Mischung werden 200 g Trimethylolpropantrimethylacrylat (TRIM) als Vernetzer zugegeben sowie verschiedene Peroxide (z.B. Peroxan BCC, Laurox und Trigonox).

Zur Herstellung der Gießmasse für die Vergleichsbeispiele 1 und 2 sowie die Beispiele 1 und 2 wird die Bindemittelkomponente mit einem anorganischen Füllstoff, einem funktionalisierten Organosiloxan sowie gegebenenfalls Glasfasern bzw. Keratinfasern gemischt und die Mischung homogenisiert. Die jeweiligen Gewichtsverhältnisse der einzelnen Komponenten sind in der nachfolgenden Tabelle 1 angegeben:

**Tabelle 1**

| | VergleichsBeispiel 1 | VergleichsBeispiel 2 | Beispiel 1 | Beispiel 2 |
|---|---|---|---|---|
| Bindemittel | 22,70 Gew.% | 22,70 Gew.% | 23,575 Gew.% | 24,456 Gew.% |
| Füllstoff | 72,50 Gew.% | 72,25 Gew.% | 71,500 Gew.% | 70,492 Gew.% |
| Siloxan | 4,80 Gew.% | 4,80 Gew.% | 4,800 Gew.% | 4,802 Gew.% |
| Glasfasern | - | 0,25 Gew.% | - | - |
| Keratinfasern | - | - | 0,125 Gew.% | 0,250 Gew.% |

Bei dem anorganischen Füllstoff handelt es sich um Quarzsand mit einer mittleren Partikelgröße im Bereich von 0,1 bis 0,5 mm (Dorsilit Nr. 9; Firma Dorfner, Hirschau). Bei der Komponente "Siloxan" handelt es sich um eine ca. 8 gew.%ige Mischung eines acrylatfunktionalisierten Organosiloxans in der Bindemittelkomponente (Tegomer V-Si 7255; Firma Goldschmidt AG, Essen).

Als Glasfasern in dem Vergleichsbeispiel 2 wurden silanisierte Glasfasern mit einer Länge von 4 mm und einem Durchmesser von 10 µm (laut Herstellerangaben) eingesetzt (EC 10 701 ThermoFlow®; Johns Manville Corporation, Denver, USA).

Für die erfindungsgemäßen Beispiele 1 und 2 wurden Keratinfasern verwendet, die durch Auskämmen, Schneiden und Entfetten von Schafswolle erhalten wurden. Die Keratinfasern weisen eine Länge im Bereich von ca. 3 bis 5 mm und einen Durchmesser im Bereich von ca. 20 bis 25 µm auf.

### 2. Herstellung der Kunststoffformteile

Die homogenisierte und evakuierte Gießmasse wird in ein entsprechendes Formenwerkzeug für eine Küchenspüle gefüllt (Befüllzeit ca. 60 Sekunden) und das Formenwerkzeug auf ca. 95 °C aufgeheizt. Nach ca. 12 Minuten wird die anstehende Gießmasse abgekoppelt und das Formenwerkzeug für weitere 18 Minuten auf der vorgenannten Temperatur gehalten. Anschließend wird abgekühlt und das Kunststoffformteil entformt.

### 3. Messung der Schlagzähigkeit

Die Schlagzähigkeit wird für jedes Beispiel bzw. Vergleichsbeispiel an jeweils 10 Probenstücken gemessen, die aus dem Beckenboden der Küchenspülen mittels eines Trennschleifers ausgeschnitten werden. Diese Probenstücke weisen eine Länge von ca. 80 mm, eine Höhe von ca. 6 mm und eine Breite von ca. 10 mm auf, wobei die Breite der Dicke des Beckenbodens der Küchenspülen entspricht.

Die Bestimmung der Schlagzähigkeit wird mit einem Pendelschlagwerk (Firma Zwick, UIm) entsprechend DIN EN ISO 179-1 durchgeführt (schmalseitiger Schlag). Die Probenstücke werden dabei so gegen die beiden Widerlager (Abstand 62 mm) gelegt, dass die Schlagrichtung entlang der Breite des Probenstückes verläuft (d.h. von der Spülensichtseite zur Spülenrückseite) und die Hammerschneide des Pendels in der Mitte des Probenstücks auftrifft. Aus der Anzeige des Messgeräts (für den Bruch des Probenstücks verbrauchte Schlagarbeit in %) sowie aus der dem verwendeten Pendel entsprechenden maximalen Schlagarbeit (500 mJ) und den Abmessungen der Bruchfläche (Breite x Höhe) kann die Schlagzähigkeit (in mJ/mm²) berechnet werden.

### 4. Ergebnisse

Bei den Küchenspülen gemäß den Beispielen 1 und 2 war bei Betrachtung im Gegenlicht eine sehr homogene Verteilung der Keratinfasern in der Polymermatrix zu beobachten. Demgegenüber kam es bei dem Vergleichsbeispiel 2 durch ein Absinken der Glasfasern während des Aushärtens zu Inhomogenitäten.

Die nach dem obigen Verfahren ermittelten Schlagzähigkeitswerte der Küchenspülen gemäß den Vergleichsbeispielen 1 und 2 sowie den Beispielen 1 und 2 sind in der nachfolgenden Tabelle 2 angegeben, wobei es sich jeweils um den Mittelwert aus Messungen an zehn Probenstücken handelt. Zusätzlich ist die Standardabweichung angegeben.

**Tabelle 2**

| | VergleichsBeispiel 1 | VergleichsBeispiel 2 | Beispiel 1 | Beispiel 2 |
|---|---|---|---|---|
| Schlagzähigkeit [mJ/mm²] | 1,893 | 1,950 | 2,329 | 2,647 |
| Standardabweichung [mJ/mm²] | 0,286 | 0,279 | 0,240 | 0,224 |

In der Figur 1 sind die Schlagzähigkeiten der verschiedenen Küchenspülen (ausgefüllte Balken) sowie die Standardabweichungen (schraffierte Balken) in einem Diagramm graphisch dargestellt.

Die Beispiele zeigen, dass die Schlagzähigkeit von gefüllten Kunststoffformteilen bereits durch den Zusatz von nur 0,125 Gew.% Keratinfasern von weniger als 2,0 mJ/mm² auf mehr als 2,3 mJ/mm² erhöht werden kann. Bei einem Anteil von 0,25 Gew.% werden sogar Werte oberhalb von 2,6 mJ/mm² erreicht, während beim Zusatz derselben Menge an Glasfasern kein vergleichbarer Effekt beobachtet werden kann.

Der erfindungsgemäße Zusatz von Keratinfasern zu aushärtbaren Gießmassen stellt somit eine einfache und kostengünstige Möglichkeit dar, um die Widerstandsfähigkeit von Küchenspülen und anderen Kunststoffformteilen, die im Küchen- und Sanitärbereich zum Einsatz kommen, gegen Schlag- und Stoßbelastungen deutlich zu erhöhen, und der durch den hohen Füllstoffgehalt bedingten relativen Sprödigkeit entgegenzuwirken.

## Patentansprüche

1. Verwendung einer aushärtbaren Gießmasse zur Herstellung von Küchen- oder Sanitärartikeln, umfassend eine Bindemittelkomponente auf Basis von Methylacrylat oder Methylmethacrylat als polymerisierbares Monomer und einen Anteil von 40 bis 85 Gew.% eines oder mehrerer anorganischer Füllstoffe, **dadurch gekennzeichnet, dass** die Gießmasse einen Anteil von 0,1 bis 0,5 Gew.% an Keratinfasern umfasst, wobei die Keratinfasern eine Länge von bis zu 10 mm und einen Durchmesser von 10 bis 50 µm aufweisen.

2. Verwendung nach Anspruch 1, **dadurch gekennzeichnet, dass** der Anteil an Keratinfasern in der Gießmasse 0,15 bis 0,35 Gew.%, beträgt.

3. Verwendung nach einem der vorangehenden Ansprüche, **dadurch gekennzeichnet, dass** die Keratinfasern eine Länge von bis zu 5 mm aufweisen.

4. Verwendung nach einem der vorangehenden Ansprüche, **dadurch gekennzeichnet, dass** die Keratinfasern einen Durchmesser von 20 bis 25 µm aufweisen.

5. Verwendung nach einem der vorangehenden Ansprüche, **dadurch gekennzeichnet, dass** die Keratinfasern aus Säugetierhaar gewonnen sind.

6. Verwendung nach Anspruch 5, **dadurch gekennzeichnet, dass** die Keratinfasern durch Auskämmen und Schneiden von Schafswolle gewonnen sind.

7. Verwendung nach Anspruch 5 oder 6, **dadurch gekennzeichnet, dass** die Keratinfasern entfettet sind.

8. Verwendung nach einem der vorangehenden Ansprüche, **dadurch gekennzeichnet, dass** die Bindemittelkomponente einen Anteil an vorpolymerisiertem Polymethylacrylat oder Polymethylmethacrylat umfasst.

9. Verwendung nach einem der vorangehenden Ansprüche, **dadurch gekennzeichnet, dass** der anorganische Füllstoff ausgewählt ist aus Quarz, Cristobalit, Tridymit, Glas, Aluminiumtrihydroxid, Wollastonit oder Mischungen hiervon.

10. Verwendung nach einem der vorangehenden Ansprüche, **dadurch gekennzeichnet, dass** der anorganische Füllstoff granulare Partikel mit einem mittleren Durchmesser von 0,1 bis 1 mm umfasst.

11. Verwendung nach einem der vorangehenden Ansprüche, **dadurch gekennzeichnet, dass** der anorganische Füllstoff Partikel in Form von Fasern, Whiskern oder Nadeln umfasst.

12. Verwendung nach einem der vorangehenden Ansprüche, **dadurch gekennzeichnet, dass** die Gießmasse ein mit einer ungesättigten Gruppe funktionalisiertes Organosiloxan umfasst.

13. Verwendung nach einem der vorangehenden Ansprüche, **dadurch gekennzeichnet, dass** die Küchen- oder Sanitärartikel ausgewählt sind aus Küchenspülen, Küchenarbeitsplatten, Waschbecken, Badewannen.

14. Küchen- oder Sanitärartikel, herstellbar unter Verwendung einer Gießmasse nach einem der Ansprüche 1 bis 13.

## Claims

1. Use of a curable casting compound for the production of kitchen or sanitary articles comprising a binder component based on methyl acrylate or methyl methacrylate as a polymerisable monomer and a proportion of about 40 to about 85% by weight of one or more inorganic fillers, **characterized in that** the casting compound comprises a proportion of 0.1 to 0.5% by weight of keratin fibres, wherein the keratin fibres have a length of up to 10 mm and a diameter of 10 to 50 µm.

2. Use according to claim 1, **characterised in that** the proportion of keratin fibres is 0.15 to 0.35 % by weight.

3. Use according to any one of the preceding claims, **characterised in that** the keratin fibres have a length of up to 5 mm.

4. Use according to any one of the preceding claims, **characterised in that** the keratin fibres have a diameter of 20 to about 25 µm.

5. Use according to any one of the preceding claims, **characterised in that** the keratin fibres are obtained from mammalian hair.

6. Use according to claim 5, **characterised in that** the keratin fibres are obtained by combing out and cutting sheep's wool.

7. Use according to claim 5 or 6, **characterised in that** the keratin fibres are degreased.

8. Use according to any of the preceding claims, **characterised in that** the binder component comprises a proportion of prepolymerised polymethyl acrylate or polymethyl methacrylate.

9. Use according to any one of the preceding claims, **characterised in that** the inorganic filler is selected from quartz, cristobalite, tridymite, glass, aluminium trihydroxide, wollanstonite or mixtures thereof.

10. Use according to any one of the preceding claims, **characterised in that** the inorganic filler comprises granular particles with a mean diameter of 0.1 to 1 mm.

11. Use according to any one of the preceding claims, **characterised in that** the inorganic filler comprises particles in the form of fibres, whiskers or needles.

12. Use according to any one of the preceding claims, **characterised in that** the casting compound comprises an organosiloxane functionalised with an unsaturated group.

13. Use according to any one of the preceding claims, **characterized in that** the kitchen or sanitary articles are selected from kitchen sinks, kitchen worktops, washbasins, bathtubs.

14. Plastic moulded part, obtainable by using a casting compound according to any one of claims 1 to 13.

## Revendications

1. Utilisation d'une masse de coulée durcissable pour fabriquer des articles de cuisine ou sanitaires, comprenant un composant liant à base d'acrylate de méthyle ou de méthacrylate de méthyle en tant que monomère polymérisable et une fraction de 40 à 85 % en poids d'une ou plusieurs charges anorganiques, **caractérisée en ce que** la masse de coulée comporte une fraction de 0,1 à 0,5 % en poids de fibres de kératine, les fibres de kératine présentant une longueur pouvant atteindre 10 mm et un diamètre de 10 à 50 µm.

2. Utilisation selon la revendication 1, **caractérisée en ce que** la fraction de fibres de kératine dans la masse de coulée est de 0,15 à 0,35 % en poids.

3. Utilisation selon l'une quelconque des revendications précédentes, **caractérisée en ce que** les fibres de kératine ont une longueur pouvant atteindre 5 mm.

4. Utilisation selon l'une quelconque des revendications précédentes, **caractérisée en ce que** les fibres de kératine ont un diamètre de 20 à 25 µm.

5. Utilisation selon l'une quelconque des revendications précédentes, **caractérisée en ce que** les fibres de kératine sont obtenues à partir de poils de mammifères.

6. Utilisation selon la revendication 5 **caractérisée en ce que** les fibres de kératine sont obtenues par peignage et coupe de laine de mouton.

7. Utilisation selon la revendication 5 ou la revendication 6, **caractérisée en ce que** les fibres de kératine sont dégraissées.

8. Utilisation selon l'une quelconque des revendications précédentes, **caractérisée en ce que** le composant liant comporte une fraction de polyacrylate de méthyle ou de polyméthacrylate de méthyle prépolymérisé.

9. Utilisation selon l'une quelconque des revendications précédentes, **caractérisée en ce que** la charge anorganique est choisie parmi le quartz, la cristobalite, la tridymite, le verre, le trihydroxyde d'aluminium, la wollastonite ou des mélanges de ces matériaux.

10. Utilisation selon l'une quelconque des revendications précédentes, **caractérisée en ce que** la charge anorganique comporte des particules granulaires d'un diamètre moyen de 0,1 à 1 mm.

11. Utilisation selon l'une quelconque des revendications précédentes, **caractérisée en ce que** la charge anorganique comporte des particules en forme de fibres, de barbes ou d'aiguilles.

12. Utilisation selon l'une quelconque des revendications précédentes, **caractérisée en ce que** la masse de coulée comporte un siloxane organique fonctionnalisé avec un groupement insaturé.

13. Utilisation selon l'une quelconque des revendications précédentes, **caractérisée en ce que** les articles de cuisine ou sanitaires sont sélectionnés parmi les éviers de cuisine, les plans de travail de cuisine, les lavabos, les baignoires.

14. Articles de cuisine ou sanitaires pouvant être fabriqués en utilisant une masse de coulée selon l'une quelconque des revendications 1 à 13.
